# EUROPÄISCHE PATENTANMELDUNG

(11) **EP 2 261 842 A1**
(43) Veröffentlichungstag der Anmeldung: **15.12.2010**
(21) Anmeldenummer: 09162196.1
(22) Anmeldetag: 08.06.2009
(51) Int. Cl.: G06Q 10/00

(54) **Überwachungsverfahren**

(71) Anmelder: Propst, Claus, 36304 Alsfeld (DE); Shaheen, Mohammad Azem, 65760 Eschborn (DE)
(72) Erfinder: Propst, Claus, 36304 Alsfeld (DE); Shaheen, Mohammad Azem, 65760 Eschborn (DE)
(74) Vertreter: Tappe, Hartmut

(57) **Zusammenfassung**

Die Erfindung betrifft ein Verfahren zur Überwachung einer Leistungserbringung, insbesondere einer Dienstleistung, wobei das Verfahren mittels einer Datenverarbeitungsanlage und einer Überwachungsvorrichtung ausgeführt wird, umfassend die Schritte:
a) Erfassen eines Datensatzes mit einer Leistungserbringung beschreibenden Daten,
b) Gewinnen von die Leistungserbringung beschreibenden Ist-Daten mittels der Überwachungsvorrichtung,
c) Vergleichen der Ist-Daten mit Soll-Daten,
d) Ausgeben eines Ergebnisses des Vergleichs.

## Beschreibung

Die Erfindung betrifft ein Verfahren zur Überwachung einer Leistungserbringung, insbesondere einer Dienstleistung, mit den Merkmalen des Anspruchs 1.

Bei auf Dienstleistungen basierenden Geschäftsprozessen besteht regelmäßig die Problematik, dass eine Ausführung einer Dienstleistung nur mit erhöhtem Aufwand zu überprüfen bzw. zu überwachen ist. Dies ist insbesondere für den Bereich des Facility Managements zutreffend, da hier oft eine große Anzahl von regelmäßig wiederkehrenden Einzeldienstleistungen, wie beispielsweise eine turnusmäßige Reinigung eines Gebäudes, zu überwachen ist. Im Facility Management sind Dienstleistungen insofern schwer zu überwachen, da Dienstleistungen an technischen Objekten oder Einrichtungen durchgeführt werden, die räumlich weit auseinander liegen, wie beispielsweise dezentrale Niederlassungen eines Unternehmens in verschiedenen Städten oder Orten. Auch ist es üblich, Dienstleistungen an Gebäuden, Einrichtungen oder Objekten durch externe Dienstleister durchführen zu lassen. Derartige Dienstleister können auch eine Anzahl von Subkontraktoren, beispielsweise an den jeweils betreffenden Gebäudestandorten, zur Ausführung der Dienstleistungen beauftragen. Eine zentrale Kontrolle einer vertraglich vereinbarten Dienstleistung, beispielsweise der Reinigung von auf mehrere Standorte verteilten Gebäuden, ist daher kaum möglich, da regelmäßige Abnahmen vieler Einzelleistungen durch eine Person vor Ort erfolgen müssten.

Da Facility Management-Dienstleistungen häufig in einem Bieterverfahren von einem Auftraggeber vergeben werden, unterliegt der Auftragnehmer einem Preisdruck, der zur Folge hat, dass die zu erbringenden Dienstleistungen geringe Gewinne versprechen und den die Dienstleistungen ausführenden Personen nur wenig Zeit zur Leistungserbringung zur Verfügung steht. Dies kann dazu führen, dass die Dienstleistungen nur unvollständig oder mangelhaft erbracht werden, insbesondere da eine Überwachung der Leistungserbringung durch weitere Personen in einem ökonomisch sinnvollen Rahmen kaum möglich ist. Vielfach ist die die jeweilige Dienstleistung ausführende Person auch für eine Meldung einer Ausführung und damit für eine Kontrolle ihrer eigenen Leistung zuständig.

Aus dem Stand der Technik sind weiter computergestützte Verfahren zur Überwachung einer Leistungserbringung im Bereich des Facility Management bekannt. Derartige Softwareanwendungen erlauben keine unmittelbare Prüfung bzw. Überwachung einer Leistungserbringung durch die Software selbst, da mittels der Software lediglich ein Status der Leistungserbringung verfolgt wird, und der Status bzw. eine Information über die Leistungserbringung durch Personal in die Software eingepflegt wird. Ein Auftraggeber hat somit auch hier keine unmittelbare Kontrolle über eine tatsächlich von einem Auftragnehmer durchgeführte Dienstleistung und ist immer auf eine personelle Überwachung und Informationsweitergabe mit den damit verbundenen Nachteilen angewiesen.

Der vorliegenden Erfindung liegt daher die Aufgabe zugrunde, ein Verfahren vorzuschlagen, das eine verbesserte Überwachung einer Leistungserbringung ermöglicht.

Diese Aufgabe wird durch ein Verfahren mit den Merkmalen des Anspruchs 1 gelöst.

Das erfindungsgemäße Verfahren zur Überwachung einer Leistungserbringung, insbesondere einer Dienstleistung, wird mittels einer Datenverarbeitungsanlage und einer Überwachungsvorrichtung ausgeführt und umfasst die Schritte:
a) Erfassen eines Datensatzes mit einer Leistungserbringung beschreibenden Daten,
b) Gewinnen von die Leistungserbringung beschreibenden Ist-Daten mittels der Überwachungsvorrichtung,
c) Vergleichen der Ist-Daten mit Soll-Daten,
d) Ausgeben eines Ergebnisses des Vergleichs.

Die Datenverarbeitungsanlage und die Überwachungsvorrichtung bilden eine technische Überwachungsanordnung, wobei zunächst im Schritt a) ein Import zumindest eines Datensatzes in die Datenverarbeitungsanlage erfolgt. Der Import wird vorzugsweise automatisiert durchgeführt und der Datensatz umfasst Informationen die eine Leistungserbringung beschreiben bzw. eine Verifizierung der Leistungserbringung ermöglichen, beispielsweise eine Art der Leistung, deren Umfang und ein zu erwartendes Ergebnis. Da die Leistung von einer auszuführenden Person an einem Objekt oder einer Einrichtung zu erbringen ist, erfolgt nachfolgend in Schritt b) eine Gewinnung von die Leistung beschreibenden Ist-Daten mittels der technischen Überwachungsvorrichtung. Die Ist-Daten beschreiben zumindest einen Umfang und ein Ergebnis der tatsächlich ausgeführten Leistung. An dieser Stelle entfällt insbesondere eine Kontrolle der Leistungserbringung durch eine Person, da die Überwachung bzw. die Kontrolle mit technischen Mitteln erfolgt. So kann ein Erfüllungsgrad der Leistungserbringung unmittelbar ermittelt werden, ohne dass eine Person zur Informationsweitergabe notwendig ist. Auch wird ausgeschlossen, dass die Leistungserbringung möglicherweise fehlerhaft bewertet wird bzw. falsche Informationen weitergegeben werden. Im nachfolgenden Schritt c) erfolgt ein automatisierter Vergleich, der Ist-Daten aus Schritt b) mit den Soll-Daten aus Schritt a). In Schritt d) wird ein Ergebnis des Vergleichs aus Schritt c ausgegeben, so dass das Ergebnis eine objektive Bewertung der Leistungserbringung darstellt. Da das Verfahren vollständig automatisiert durchgeführt wird, ist eine Vielzahl unterschiedlicher Einzelleistungen, unabhängig von einer Ortslage der betreffenden Objekte und Einrichtungen, besonders kostengünstig und schnell überwachbar.

In einer Ausführungsform des Verfahrens kann im Schritt a) eine Erfassung und Zuordnung weiterer, auftragsbezogener Daten zu dem Datensatz erfolgen. Beispielsweise können in diesem Schritt dem Datensatz Codenummern zur Zuordnung und zur Erkennung, Buchhaltungsdaten, Fristen, Laufzeiten, Leistungsdetails, Personaldaten, auftragnehmerbezogene und auftragsrelevante Informationen hinzugefügt werden. So kann eine zu erbringende Leistung in Art eines Auftrags mit allen zur Bearbeitung des Auftrags relevanten Informationen in der Datenverarbeitungsanlage erfasst werden.

So ist es insofern vorteilhaft, wenn nach Schritt d) eine Änderung der auftragsbezogenen Daten zu dem Datensatz erfolgt. Das Ergebnis der Überwachung kann dann beispielsweise zum Versand einer Mängelanzeige oder einer Fertigmeldung an eine jeweils zuständige Person verwendet werden, wobei dies in dem Datensatz vermerkt werden kann bzw. auftragsbezogene Abrechnungsdaten dementsprechend geändert werden können.

Besonders vorteilhaft ist es, wenn nach dem Schritt a) in einem weiteren Schritt ein Status der Leistungserbringung entsprechend des Verfahrensstandes der Leistungserbringung ermittelt wird. Ein Status der Leistungserbringung kann beispielsweise Informationen über eine Art der Leistung, einen Zeitraum, einen Ort oder eine besondere Art der Leistungsausführung enthalten. Weiter können Daten zu Ausführungszeiten, Zyklen der Ausführung und Erinnerungen umfasst werden. Ein Status der Leistungserbringung kann beispielsweise von der Datenverarbeitungsanlage in Art eines Ampelsystems dargestellt werden, so dass der jeweilige Status schnell erkennbar ist. Auch kann die Datenverarbeitungsanlage dann erkennen, welche Leistung zu einer Weiterbearbeitung im Rahmen des Verfahrens ansteht.

Nach einem im Schritt a) bestimmten Zeitabstand kann das Verfahren ab dem weiteren Schritt durch eine Änderung des Verfahrensstandes der Leistungserbringung weitergeführt werden. Das heißt, dass der Datensatz im Schritt a) eine Information enthalten kann, die einen Zeitabstand bzw. einen Zyklus zur beispielsweise Pflege einer Gartenanlage enthält, und dass nach Ablauf des Zeitabstandes, ausgehend von der letzten Leistungserbringung bzw. Pflege der Datensatz so geändert wird, dass die Gartenpflege erneut zur Erledigung ansteht und wie vorbeschrieben durch das Verfahren behandelt wird.

Ein derartiges Auslösen einer Leistung eines Auftrages kann auch nach einer im Schritt a) erfolgten Änderung der Soll-Daten erfolgen, wobei dann das Verfahren ab dem weiteren Schritt durch eine Änderung des Verfahrensstandes der Leistungserbringung weitergeführt wird. Eventuelle Änderungen eines Auftrages hinsichtlich eines Zeitabstandes, eines Umfangs oder einer Art der Leistung können dann im Rahmen des Verfahrens unmittelbar berücksichtigt werden, wobei die Änderungen eine Änderung des Verfahrensstandes und somit eine direkte Fortsetzung des Verfahrens auslösen können.

Weiter kann im Schritt d) bei einer möglichen Übereinstimmung oder Abweichung der Ist-Daten von den Soll-Daten der Datensatz an den weiteren Schritt übergeben werden. Das Ergebnis kann demnach eine Meldung über eine auftragsgemäße Leistungserbringung oder über eine nichtauftragsgemäße Leistungserbringung infolge mangelhafter oder unvollständiger Leistung umfassen. Dieses Ergebnis kann zu einer Änderung des Verfahrensstandes der Leistungserbringung herangezogen werden, derart, dass der Verfahrensstand den Status einer erbrachten bzw. nicht erbrachten oder unvollständigen Leistung erhält. Im Falle des Letzteren kann ein erneuter Ablauf des Verfahrens ab dem weiteren Schritt automatisch erfolgen. Eine wiederholte Prüfung der Leistungserbringung kann dann nach einem vorgegebenen Zeitintervall ebenfalls automatisch durchgeführt werden, wobei zuvor an einen Auftragnehmer eine Information mit dem Ergebnis der letzten Überprüfung gesandt werden kann.

Das Verfahren kann weiter verbessert werden, wenn im Schritt d) bei einer möglichen Übereinstimmung der Ist-Daten mit den Soll-Daten der Datensatz an ein Buchhaltungssystem übergeben wird. Insbesondere wenn das Verfahren im Rahmen eines Geschäftsprozesses eingesetzt wird, kann so automatisiert eine Abrechnung einer Leistung zwischen einem Auftraggeber und einem Auftragnehmer erfolgen. Alternativ ist es möglich, bei einer als mangelhaft festgestellten Leistung entsprechende Minderungen der Abrechnung vorzusehen. Das Buchhaltungssystem kann ein oder kein Bestandteil der Überwachungsanordnung sein. So kann eine Verbindung zu dem Buchhaltungssystem auch über eine Datenschnittstelle hergestellt sein.

Nach Schritt c) kann bei einer möglichen Abweichung der Ist-Daten von den Soll-Daten eine mögliche Störungsursache oder ein Mangel der Leistungserbringung ermittelt werden. Dies kann dadurch erfolgen, dass die Abweichung automatisch einem Mangel zugeordnet wird, oder dass die Störungsursache unmittelbar aus den von der Überwachungsvorrichtung gewonnen Daten herleitbar ist. Beispielsweise kann eine zu reinigende Straße aufgrund von Bauarbeiten nicht zu reinigen sein, wobei dann die Überwachungsvorrichtung diese Störungsursache erkennen kann. In der Datenverarbeitungsanlage kann vorzugsweise eine Reihe möglicher Störungsursachen und Mängel gespeichert und im Rahmen einer Datenbank zur Verfügung gestellt werden.

In einer Ausführungsform kann die Überwachungsvorrichtung als eine Kameraeinrichtung ausgebildet sein, wobei ein die Leistungserbringung beschreibender Ist-Bilddatensatz gewonnen wird, der mit einem Soll-Bilddatensatz verglichen wird. Die Kameraeinrichtung kann eine konventionelle digitale Kamera oder Videokamera sein, die beispielsweise auf ein Objekt, wie eine Rasenfläche, gerichtet ist und deren Zustand erfasst. So kann ein Bilddatensatz einer gemähten Rasenfläche von einem Bilddatensatz einer nicht gemähten Rasenfläche abweichen, wobei der Bilddatensatz der gemähten Rasenfläche als Soll-Bilddatensatz verwendet werden kann. Hat zum Beispiel der Rasen eine gewisse Wuchshöhe erreicht, kann ein Vergleich der Bilddatensätze im Rahmen des Verfahrens zur Anfrage der Leistung des Rasenmähens genutzt werden. Zu einem späteren Zeitpunkt kann ein weiterer Vergleich der Bilddatensätze zur Überwachung einer vertragsgemäßen Ausführung des Rasenmähens genutzt werden.

Besonders vorteilhaft ist es, wenn mittels der Kameraeinrichtung eine Positionsbestimmung der Leistungserbringung erfolgen kann. Eine Positionsbestimmung kann eine Verortung der Kameraeinrichtung mittels eines GPS-Systems oder auch eine Ortsbestimmung für das zu überwachende Objekt auf Basis des Bilddatensatzes umfassen. Weiter kann eine beispielsweise zu reinigende Fläche aus dem Bilddatensatz berechnet werden. So kann unter anderem auch ein Reinigungsfortschritt überwacht werden.

In einer weiteren Ausführungsform kann die Überwachungsvorrichtung als ein Datenscanner ausgebildet sein, wobei ein die Leistungserbringung beschreibender Ist-Codedatensatz gewonnen wird, der mit einem Soll-Codedatensatz verglichen wird. Der Datenscanner kann beispielsweise ein optischer Scanner, wie ein Barcodescanner oder auch ein Scanner für ein Transpondersignal sein, wobei der Datenscanner dazu verwendet werden kann, alleine einen Code zu erkennen, der einem Objekt zugeordnet ist. Der Code ist vorzugsweise bereits in der Datenverarbeitungsanlage vorhanden und kann von dieser einem Objekt und/oder einer Leistung zugeordnet werden. Eine Erfassung oder ein Wechsel des Codes kann demnach ein Eintreffen bzw. einen Transport eines Objekts oder eine Ausführung einer Leistung signalisieren. Beispielsweise kann einem zu prüfenden Feuerlöscher nach einer Prüfung ein neuer Code zugewiesen werden, der von dem Datenscanner erfasst wird.

In einer Ausführungsform kann die Überwachungsvorrichtung als eine Transpondereinrichtung mit einem Transponder und einem Empfänger ausgebildet sein, wobei ein die Leistungserbringung beschreibender Ist-Zustandsdatensatz gewonnen wird, der mit einem Soll-Zustandsdatensatz verglichen wird. Die Transpondereinrichtung kann beispielsweise ein RFID-System umfassen, wobei der Transponder neben einem Code zur Erkennung weitere Daten an den Empfänger übermitteln kann. Diese Daten können im Rahmen des Vergleichs in Schritt c) verwendet werden. Der Transponder kann demnach auch technische Zustandsdaten eines Gerätes oder einer Einrichtung übermitteln, die im Zusammenhang mit einer Leistungserbringung stehen und die im Normalfall nur von einer Person vor Ort abgefragt werden können.

Auch kann der Transponder als Satellitennavigationssystemtransponder ausgebildet sein, wobei ein die Leistungserbringung beschreibender Ist-Positionsdatensatz gewonnen wird, der mit einem Soll-Positionsdatensatz verglichen wird. Der Satellitennavigationssystemtransponder kann beispielsweise im Rahmen eines GPS-Systems eine Position eines dem Transponder zugewiesenen Objekts ermitteln. Leistungen die eine Bewegung eines Objekts umfassen können dann kontinuierlich überwacht werden.

Zur Abrechnung und zur Terminverfolgung einer Leistungserbringung kann es vorteilhaft sein, wenn die Überwachungsvorrichtung einen Zeitraum der Leistungserbringung ermittelt. So kann überprüft werden, ob die Leistung entsprechend einer Terminvereinbarung ausgeführt wurde bzw. welcher tatsächliche Zeitaufwand für die Ausführung der Leistung zu veranschlagen ist. Beispielsweise kann ein Fertigstellungstermin einer Handwerkerleistung überwacht werden, wobei ein Zeitaufwand ebenfalls genau quantifiziert werden kann.

Besonders vorteilhaft können die durch das Verfahren gewonnen Daten mit Datenverarbeitungsanlagen eines Debitors und/oder Kreditors ausgetauscht werden. Das Verfahren kann so in Geschäftsprozesse eines Auftraggebers und/oder Auftragnehmers eingebunden werden, wobei das Verfahren dann einen automatischen Ablauf der Geschäftsprozesse gewährleistet, der eine objektive Überwachung der in diesem Rahmen zu erbringenden Leistungen gestattet.

Im Folgenden wird die Erfindung unter Bezugnahme auf die beigefügte Zeichnung näher erläutert.

Es zeigen:
- **Fig. 1**: eine schematische Darstellung eines Aufbaus einer Über- wachungsanordnung;
- **Fig. 2**: ein allgemeines Ablaufdiagramm für eine Ausführungs- form des Verfahrens;
- **Fig. 3**: ein Ablaufdiagramm für einen ersten Schritt des Verfah- rens gemäß **Fig. 2**;
- **Fig. 4**: ein Ablaufdiagramm für eine Kostenkalkulation im Rah- men des Verfahrens;
- **Fig. 5**: ein Ablaufdiagramm für eine erste Ausführungsform eines zweiten Schritts des Verfahrens gemäß **Fig. 2****;**
- **Fig. 6**: ein Ablaufdiagramm für eine zweite Ausführungsform ei- nes zweiten Schritts des Verfahrens gemäß **Fig. 2****;**
- **Fig. 7**: ein Ablaufdiagramm für einen dritten, vierten und fünften Schritt des Verfahrens gemäß **Fig. 2****;**
- **Fig. 8**: ein Ablaufdiagramm einer Ausführungsform des Verfah- rens mit einer ersten Überwachungsvorrichtung;
- **Fig. 9**: ein Ablaufdiagramm einer Ausführungsform des Verfah- rens mit einer zweiten Überwachungsvorrichtung;
- **Fig. 10**: ein Ablaufdiagramm einer Ausführungsform des Verfah- rens mit einer dritten Überwachungsvorrichtung;
- **Fig. 11**: ein Ablaufdiagramm einer Ausführungsform des Verfah- rens mit einer vierten Überwachungsvorrichtung;
- **Fig. 12**: ein Ablaufdiagramm einer Ausführungsform des Verfah- rens mit einer fünften Überwachungsvorrichtung.

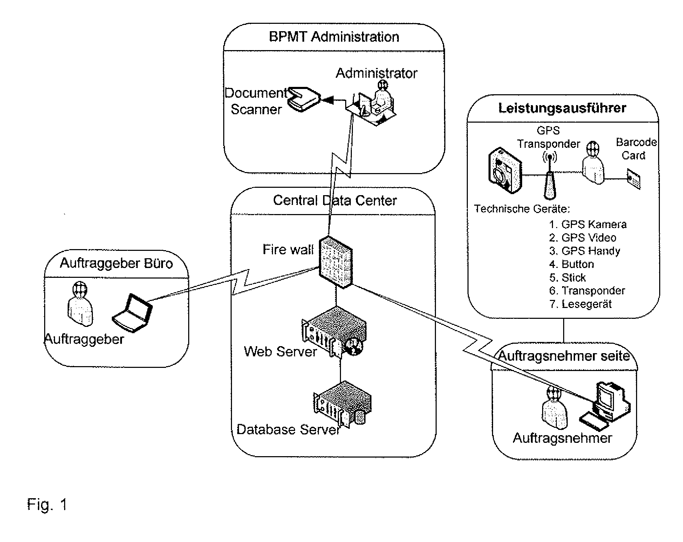

In **Fig. 1** und den nachfolgenden Figuren ist eine Überwachungsanordnung zur Ausführung des Verfahrens zur Überwachung einer Leistungserbringung der Einfachheit halber als BPMT bezeichnet. Wie **Fig. 1** zu entnehmen ist, umfasst eine Datenverarbeitungsanlage zur Ausführung des Verfahrens eine Reihe von Computern und Peripheriegeräten die an einer zentralen Stelle sowie in einem Büro eines Auftraggebers und auf Seite eines Auftragnehmers angeordnet und zum Datenaustausch miteinander verbunden sind. In diesem Beispiel ist auf der Seite des Auftragnehmers bzw. mit dessen Computer verbunden eine Überwachungsvorrichtung vorgesehen, die als eine Kamera, ein Transponder oder ein Barcodelesegerät ausgebildet sein kann.

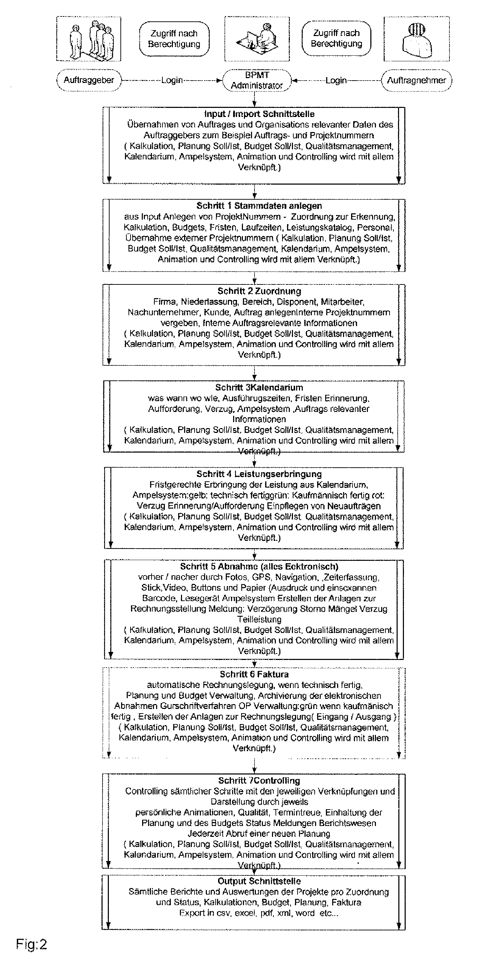

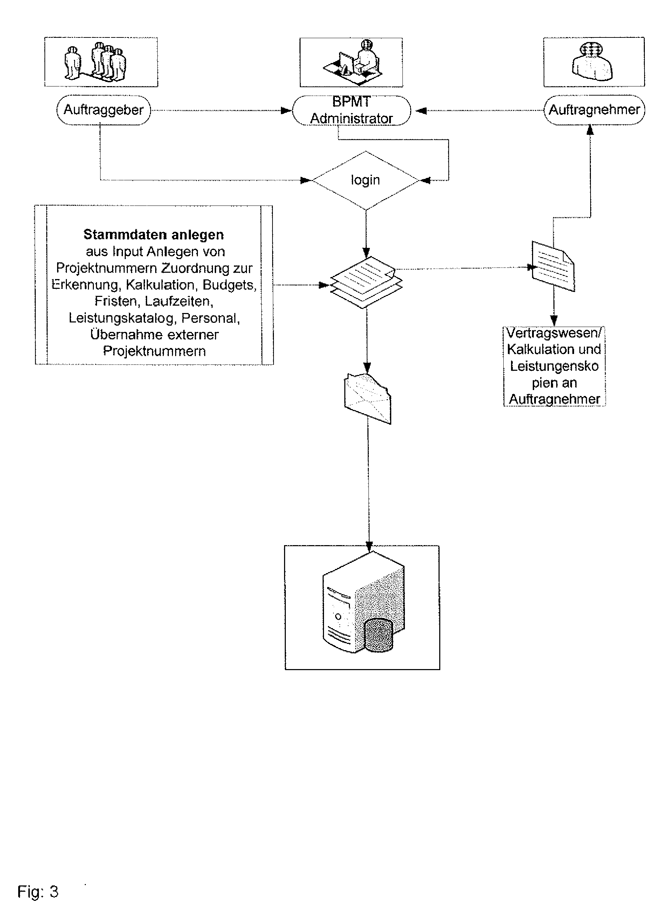

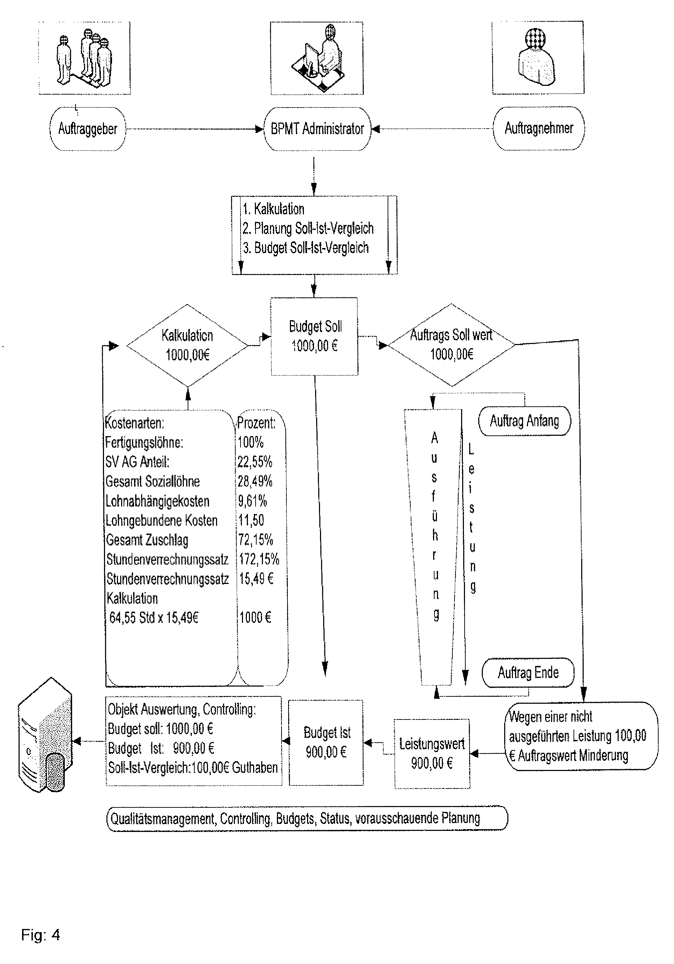

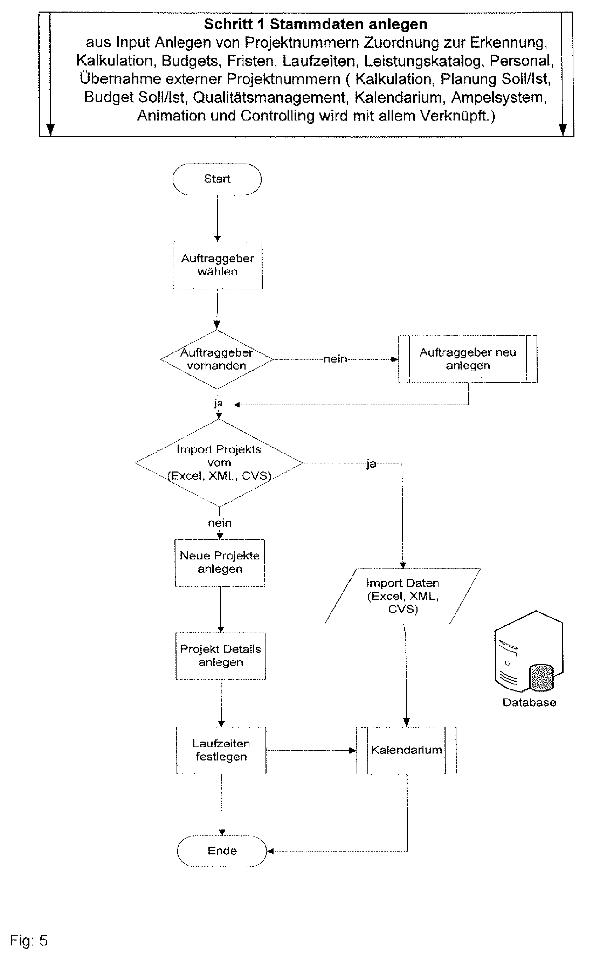

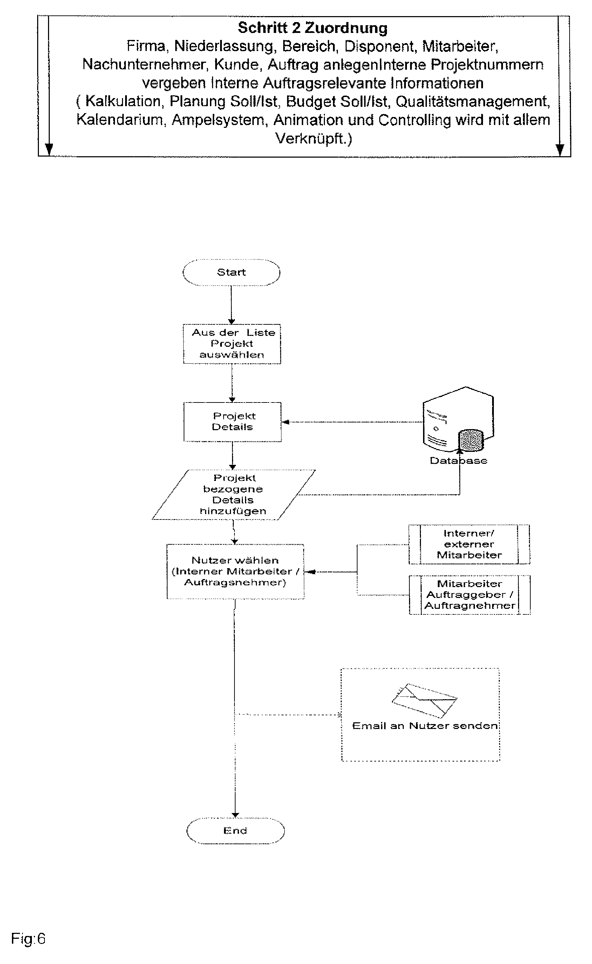

**Fig. 2** stellt einen beispielhaften Ablauf des Verfahrens in einem allgemeinen Ablaufdiagramm dar. Eine Übernahme von Daten gemäß Schritt a) des Verfahrens erfolgt hier durch eine Importschnittstelle. Der Import der Daten kann, wie in den **Fig. 3****,** **5** und **6** dargestellt einen Import weiterer, auftragsbezogener Daten oder auch ein nachträgliches Hinzufügen von Daten umfassen. Nach **Fig. 4** ist eine Verknüpfung der Daten im Rahmen einer Kostenkalkulation vorgesehen.

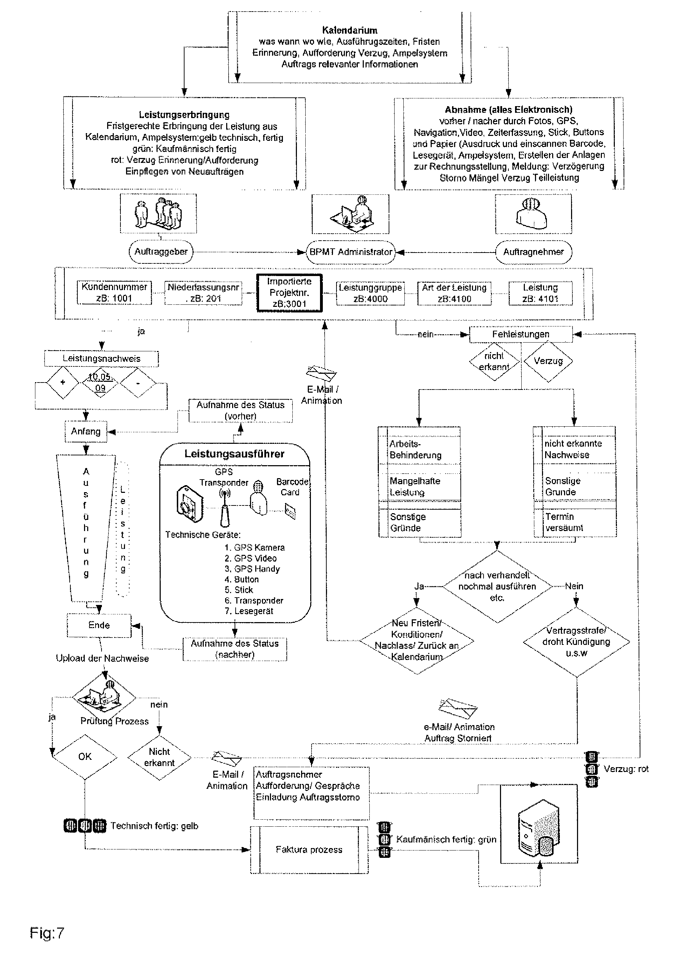

Nach **Fig. 7** erfolgt eine Auslösung eines Auftrags automatisch zu einem vorgesehenen Termin, wobei vor einer Ausführung einer Leistung ein Status mittels einer Überwachungsvorrichtung ermittelt wird, und nach Ausführung der Leistung eine erneute Aufnahme des aktuellen Status bzw. von Ist-Daten erfolgt. Nach einer Prüfung bzw. einem Vergleich der Daten wird ein Status der Leistungserbringung durch ein Ampelsystem signalisiert und bei einer Fertigstellung an eine Datenverarbeitungsanlage zur Fakturierung übergeben. Im Falle einer Nichtfertigstellung wird eine Ursache für die Nichtfertigstellung ermittelt, und in Abhängigkeit der Ursache wird der Auftrag erneut ausgelöst bzw. die Ursache an die Datenverarbeitungsanlage zur Berücksichtigung bei der Fakturierung weitergeleitet.

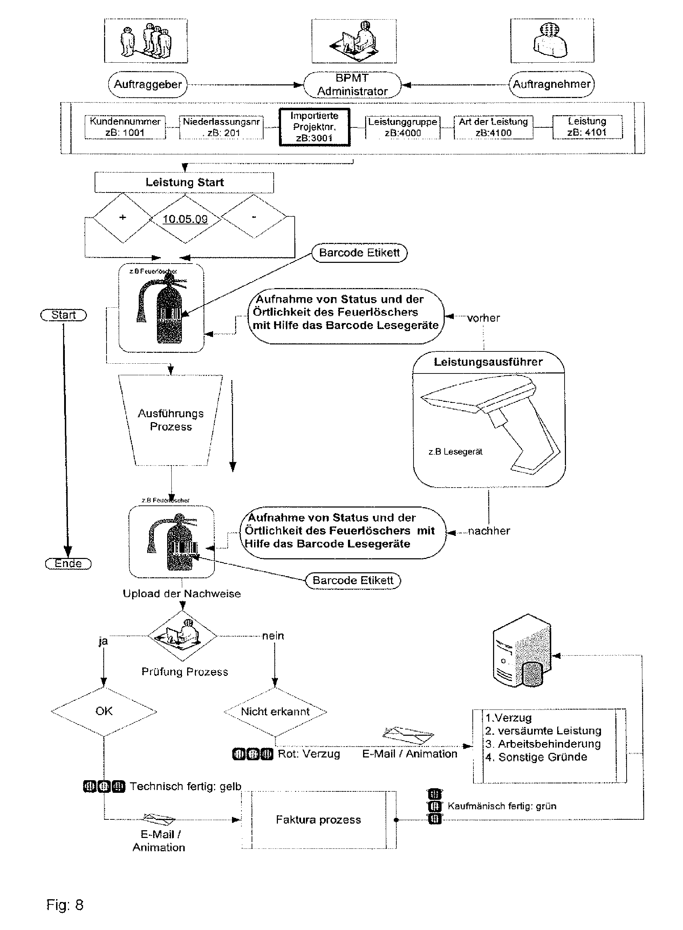

**Fig. 8** zeigt einen hier symbolhaft dargestellten Barcodescanner, der Teil einer Überwachungsvorrichtung ist. Eine Leistung umfasst eine Prüfung oder ein Auswechseln eines Feuerlöschers, wobei dem Feuerlöscher nach der Prüfung ein neuer Barcode zugeordnet wird. Die Änderung des Barcodes wird vom Barcodescanner erkannt und an die Datenverarbeitungsanlage zur Durchführung des Verfahrens weitergeleitet.

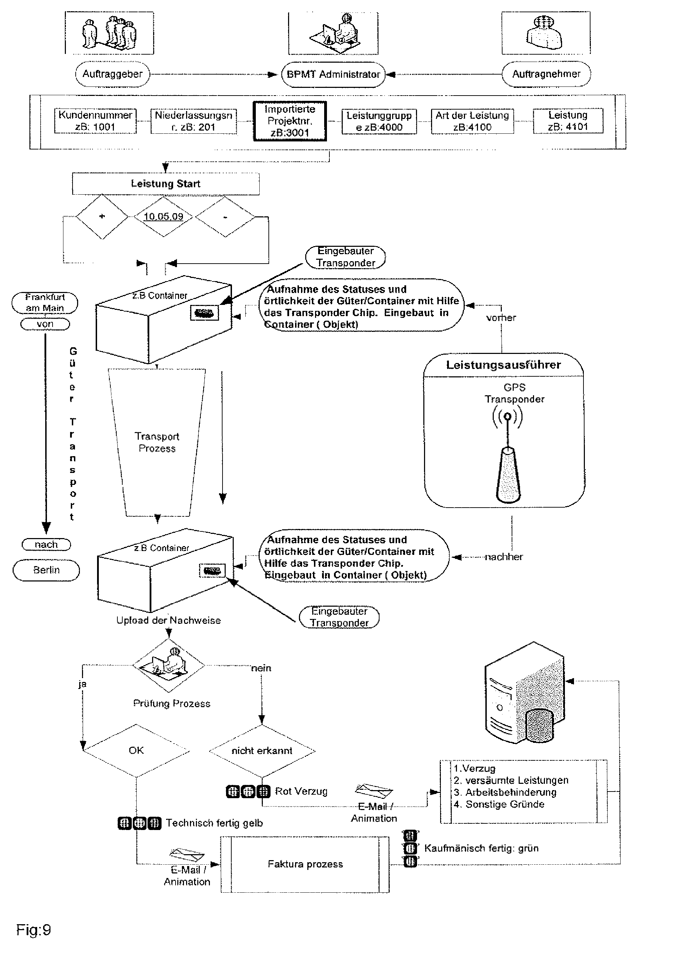

Ebenso ist, wie in **Fig. 9** dargestellt, dementsprechend ein Transport eines Objektes bzw. dessen Transportweg mittels eines GPS-Transponders überwachbar.

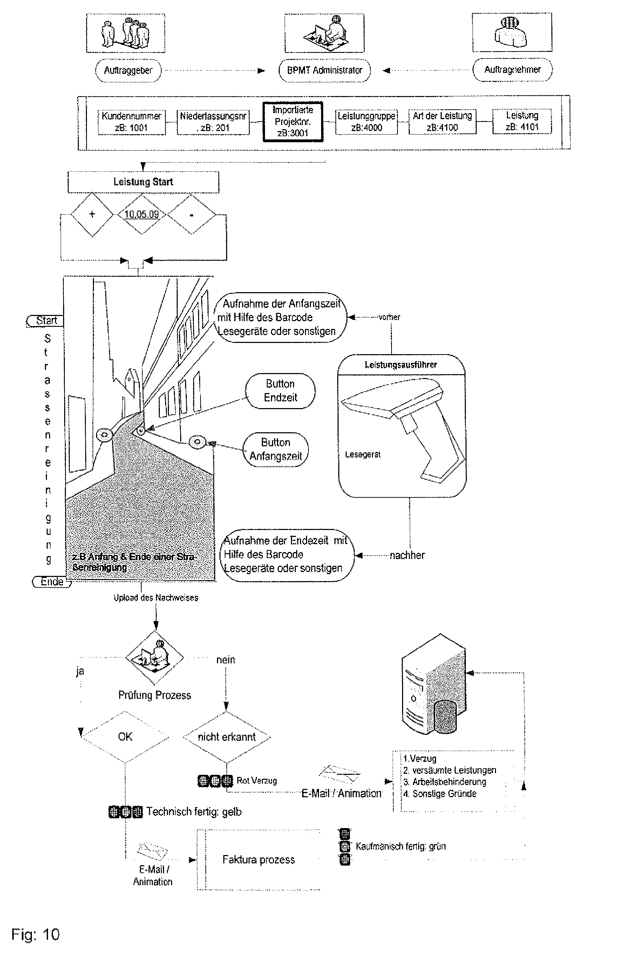

**Fig. 10** zeigt eine Überwachung einer Straßenreinigung mittels eines Lesegerätes, wobei das Lesegerät zur Erfassung einer Anfangszeit an einem Anfangspunkt und einer Fertigstellungszeit an einem Endpunkt dient.

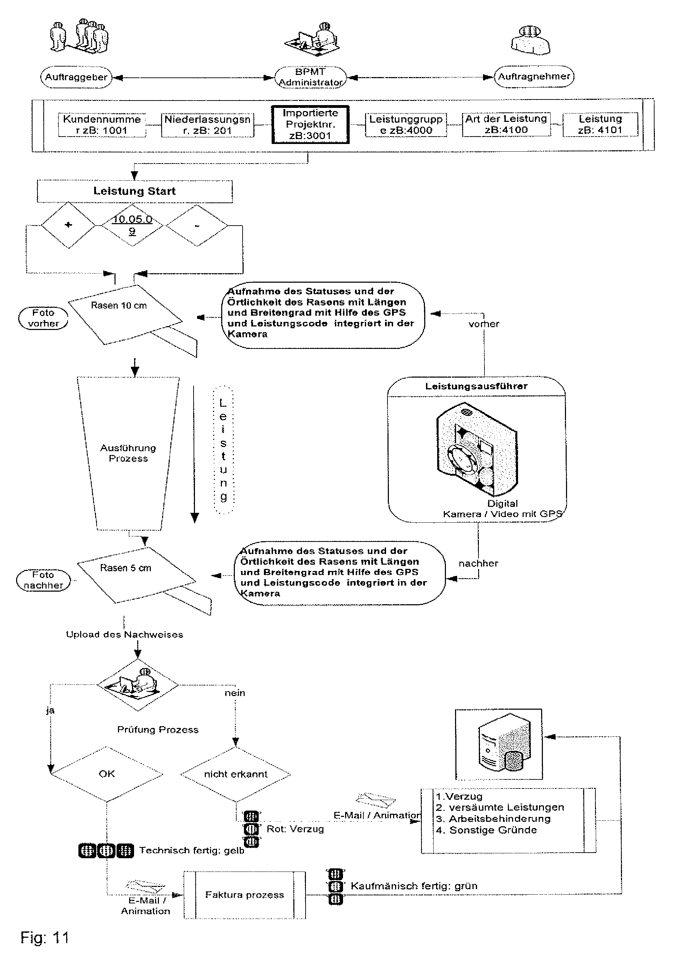

Das Beispiel in **Fig. 11** zeigt eine digitale Bilderfassung einer Rasenfläche mit einer gleichzeitigen Bestimmung der Flächenmaße auf Basis eines GPS-Systems.

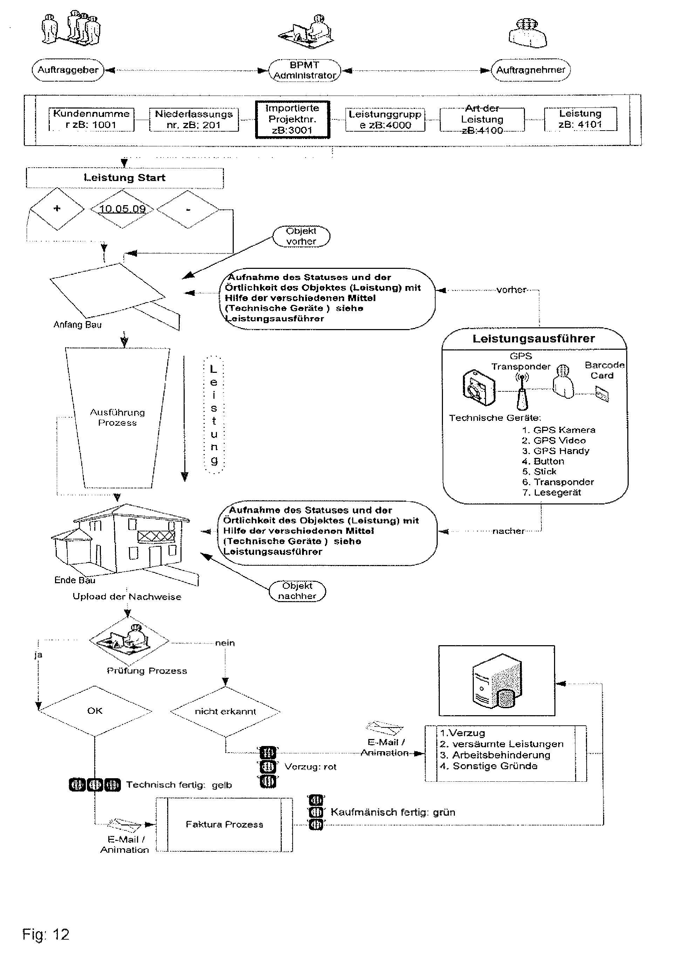

Gemäß des Beispiels in **Fig. 12** wird eine Gesamtleistung, wie die Erstellung eines Gebäudes, mittels einer Überwachungsvorrichtung überwacht, wobei die Gesamtleistung aus einer Reihe von Teilleistungen besteht. Die Überwachungsvorrichtung umfasst daher eine Anzahl von Überwachungseinrichtungen, die jeweils entsprechend ihrer Eignung für eine Überwachung einer Teilleistung zum Einsatz kommen.

## Patentansprüche

1. Verfahren zur Überwachung einer Leistungserbringung, insbesondere einer Dienstleistung, wobei das Verfahren mittels einer Datenverarbeitungsanlage und einer Überwachungsvorrichtung ausgeführt wird, umfassend die Schritte:
a) Erfassen eines Datensatzes mit eine Leistungserbringung beschreibenden Daten,
b) Gewinnen von die Leistungserbringung beschreibenden Ist-Daten mittels der Überwachungsvorrichtung,
c) Vergleichen der Ist-Daten mit Soll-Daten,
d) Ausgeben eines Ergebnisses des Vergleichs.

2. Verfahren nach Anspruch 1,
**dadurch gekennzeichnet,**
**dass** im Schritt a) eine Erfassung und Zuordnung weiterer auftragbezogener Daten zu dem Datensatz erfolgt.

3. Verfahren nach Anspruch 2,
**dadurch gekennzeichnet,**
**dass** nach Schritt d) eine Änderung der auftragbezogenen Daten zu dem Datensatz erfolgt.

4. Verfahren nach einem der vorangehenden Ansprüche,
**dadurch gekennzeichnet,**
**dass** nach Schritt a) in einem weiteren Schritt ein Status der Leistungserbringung entsprechend des Verfahrensstandes der Leistungserbringung ermittelt wird.

5. Verfahren nach Anspruch 4,
**dadurch gekennzeichnet,**
**dass** nach einem im Schritt a) bestimmten Zeitabstand das Verfahren ab dem weiteren Schritt durch eine Änderung des Verfahrensstandes der Leistungserbringung weitergeführt wird.

6. Verfahren nach einem der Ansprüche 4 oder 5,
**dadurch gekennzeichnet,**
**dass** nach einer im Schritt a) erfolgten Änderung der Soll-Daten das Verfahren ab dem weiteren Schritt durch eine Änderung des Verfahrensstandes der Leistungserbringung weitergeführt wird.

7. Verfahren nach einem der Ansprüche 4 bis 6,
**dadurch gekennzeichnet,**
**dass** in Schritt d) bei einer möglichen Übereinstimmung oder Abweichung der Ist-Daten von den Soll-Daten der Datensatz an den weiteren Schritt übergeben wird.

8. Verfahren nach einem der vorangehenden Ansprüche,
**dadurch gekennzeichnet,**
**dass** in Schritt d) bei einer möglichen Übereinstimmung der Ist-Daten mit den Soll-Daten der Datensatz an ein Buchhaltungssystem übergeben wird.

9. Verfahren nach einem der vorangehenden Ansprüche,
**dadurch gekennzeichnet,**
**dass** nach Schritt c) bei einer möglichen Abweichung der Ist-Daten von den Soll-Daten eine mögliche Störungsursache oder ein Mangel der Leistungserbringung ermittelt wird.

10. Verfahren nach einem der vorangehenden Ansprüche,
**dadurch gekennzeichnet,**
**dass** die Überwachungsvorrichtung als eine Kameraeinrichtung ausgebildet ist, wobei ein die Leistungserbringung beschreibender Ist-Bilddatensatz gewonnen wird, der mit einem Soll-Bilddatensatz verglichen wird.

11. Verfahren nach Anspruch 10,
**dadurch gekennzeichnet,**
**dass** mittels der Kameraeinrichtung eine Positionsbestimmung der Leistungserbringung erfolgt.

12. Verfahren nach einem der vorangehenden Ansprüche,
**dadurch gekennzeichnet,**
**dass** die Überwachungsvorrichtung als ein Datenscanner ausgebildet ist, wobei ein die Leistungserbringung beschreibender Ist-Codedatensatz gewonnen wird, der mit einem Soll-Codedatensatz verglichen wird.

13. Verfahren nach einem der vorangehenden Ansprüche,
**dadurch gekennzeichnet,**
**dass** die Überwachungsvorrichtung als eine Transpondereinrichtung mit einem Transponder und einem Empfänger ausgebildet ist, wobei ein die Leistungserbringung beschreibender Ist-Zustandsdatensatz gewonnen wird, der mit einem Soll-Zustandsdatensatz verglichen wird.

14. Verfahren nach Anspruch 13,
**dadurch gekennzeichnet,**
**dass** der Transponder als Satellitennavigationssystemtransponder ausgebildet ist, wobei ein die Leistungserbringung beschreibender Ist-Positionsdatensatz gewonnen wird, der mit einem Soll-Positionsdatensatz verglichen wird.

15. Verfahren nach einem der vorangehenden Ansprüche,
**dadurch gekennzeichnet,**
**dass** die Überwachungsvorrichtung einen Zeitraum der Leistungserbringung ermittelt.

16. Verfahren nach einem der vorangehenden Ansprüche,
**dadurch gekennzeichnet,**
**dass** die durch das Verfahren gewonnenen Daten mit Datenverarbeitungsanlagen eines Debitors und/oder Kreditors ausgetauscht werden.
